(19) Europäisches Patentamt
European Patent Office
Office européen des brevets

(11) **EP 1 911 648 A2**

(12) **DEMANDE DE BREVET EUROPEEN**

(43) Date de publication:
**16.04.2008 Bulletin 2008/16**

(51) Int Cl.:
**B60T 8/44** *(2006.01)* **B60T 13/52** *(2006.01)*

(21) Numéro de dépôt: **07301415.1**

(22) Date de dépôt: **28.09.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **03.10.2006 WOPCT/FR2006/008653**

(71) Demandeur: **PEUGEOT CITROËN AUTOMOBILES S.A.**
**78140 Vélizy Villacoublay (FR)**

(72) Inventeurs:
• **Boatas, Armand**
**92310 Sevres (FR)**
• **Veyssiere, Jean Luc**
**78280 Guyancourt (FR)**
• **Christophe, Thierry**
**91410 La Foret le Roi (FR)**

(54) **Procédé et système d'assistance hydraulique au freinage**

(57) L'invention concerne un procédé d'assistance hydraulique au freinage et un système d'assistance hydraulique au freinage, adaptés à certaines situations de vie du véhicule. Le véhicule comporte un système de freinage agissant sur des étriers de frein. Le système de freinage comporte au moins un maître cylindre, un dispositif amplificateur, un dispositif d'assistance adapté à générer de la pression à destination des étriers de frein. Le procédé selon l'invention comporte une étape évaluant régulièrement ou continuellement la condition suivante :
o le point de saturation du dispositif amplificateur est atteint ou les plaquettes des étriers de frein sont sujet à l'évanouissement; et,
o le gradient de pression du maître cylindre filtré est inférieur à un seuil $S_{DYN}$ évoluant dynamiquement; et,
o la fonction antiblocage n'est pas activée;
Dans le cas où ladite condition est remplie, le dispositif d'assistance est activé jusqu'à ce que :
o la fonction antiblocage soit activée et maintenue par la pression générée par le conducteur ; ou
o la pression PMC dans le maître cylindre soit inférieure à un seuil de sortie SS.
En particulier, l'invention s'applique au véhicule disposant d'un système de freinage à contrôle dynamique de stabilité.

Fig. 2b

EP 1 911 648 A2

**Description**

L'invention concerne un procédé d'assistance hydraulique au freinage et un système d'assistance hydraulique au freinage, adaptés à certaines situations de vie d'un véhicule, notamment d'un véhicule automobile. En particulier, l'invention s'applique à un véhicule disposant d'un système de génération et modulation de pression de freinage, comme par exemple un système de freinage de contrôle dynamique de stabilité.

Sur un véhicule automobile, l'assistance au freinage consiste à amplifier l'effort généré par le pied du conducteur sur la pédale de frein de manière à atteindre, dans les étriers, une pression de freinage suffisante pour permettre la décélération souhaitée par le conducteur. Généralement, l'assistance est réalisée essentiellement par un dispositif appelé amplificateur de freinage. A l'aide d'une dépression crée par le moteur ou par un accessoire attelé au moteur, comme par exemple une pompe à vide, le système amplificateur génère sur le maître cylindre du système de freinage un effort complémentaire et proportionnel à celui du pied du conducteur.

Dans l'industrie automobile, par souci d'efficacité, un même organe peut être partagé et réutilisé sur différents types et séries de véhicules, dont la masse varie en fonction notamment de leur motorisation et de leur niveau d'équipement. Ainsi, un système de freinage doit, dans la mesure du possible, répondre à ces contraintes de partage et de réutilisation. En outre, un système de freinage doit encore satisfaire aux contraintes d'encombrement sous capot dictées par les dimensions des différents véhicules. Or, un tel système de freinage peut dans certaines situations de vie du véhicule ne pas atteindre les performances attendues par les concepteurs dudit véhicule. Plus précisément, le système d'assistance pneumatique au freinage (communément appelé servo frein ou Isovac), équipant un véhicule ayant atteint sa masse totale admise en charge et dont la température des freins dépasse le seuil où les performances en freinage sont dégradées, peut être saturé à partir d'une décélération inférieure à ce qui est souhaité.

Certains systèmes d'assistance inclus dans les systèmes de freinage, en particulier les systèmes d'assistance utilisés conjointement à un système de freinage à contrôle dynamique de stabilité (ou selon l'expression anglo-saxonne Electronic Stability Program, connu également sous l'acronyme ESP), proposent des fonctions consistant à générer une pression sur les étriers du système de freinage à l'aide d'une pompe hydraulique, suite à un appui sur la pédale de frein et sous deux types de conditions d'entrée. La première condition d'entrée consiste à générer une pression d'assistance suite à la détection d'un enfoncement pédale rapide avec un certain niveau d'effort. Cette première catégorie de fonctions est communément connue sous le nom d'aide au freinage d'urgence électronique. La seconde condition d'entrée consiste à générer une pression d'assistance suite à la détection soit d'une insuffisance d'assistance, par exemple en mesurant la dépression dans la chambre du servo frein compris dans le système amplificateur, soit sur un seuil de pression et de décélération connu pour correspondre à un cas d'évanouissement des plaquettes de frein (correspondant à un niveau déterminé de dégradation du coefficient de friction suite à un échauffement conséquent). Ces systèmes n'ont pas pour fonction de compenser une carence du dimensionnement du système passif.

L'invention a notamment pour but de pallier l'inconvénient précité. A cet effet, l'invention a pour objet un procédé d'assistance au freinage d'un véhicule. Le véhicule comporte un système de freinage agissant sur des étriers de frein. Le système de freinage comporte au moins un maître cylindre, un dispositif amplificateur de type servo frein, un dispositif d'assistance adapté à générer de la pression à destination des étriers de frein. Le procédé selon l'invention comporte une étape évaluant régulièrement ou continuellement la condition d'entrée suivante :

o le point de saturation du dispositif amplificateur est atteint ; ou les plaquettes des étriers de frein sont sujet à l'évanouissement ; et
o le gradient de pression du maître cylindre filtré est inférieur à un seuil $S_{DYN}$ évoluant dynamiquement ; et
o les fonction antiblocage, contrôle de stabilité, assistance au freinage d'urgence ne sont pas activées ;

Dans le cas où ladite condition est remplie, le dispositif d'assistance est activé jusqu'à ce que :

o la fonction antiblocage soit activée ; ou
o la pression $P_{MC}$ dans le maître cylindre soit inférieure à un seuil de sortie $S_S$.

Dans une variante de l'invention, la dosabilité de freinage peut être recherchée et la source de pression peut être pilotée pour assister le conducteur jusqu'à l'atteinte d'une pression de freinage suffisante par rapport à sa consigne.

La condition SATURATION_AMPLI correspondant à l'atteinte du point de saturation du dispositif amplificateur peut être évaluée en vérifiant si la décélération effective DECCEL du véhicule est supérieure à un seuil d'accélération $S_A$ et si la pression $P_{MC}$ dans le maître cylindre est supérieure à un seuil d'entrée $S_E$.

La condition EVANOUISSEMENT correspondant aux cas où les plaquettes des étriers de frein sont sujet à l'évanouissement peut être évaluée en vérifiant si la décélération effective DECCEL du véhicule est comprise entre un seuil d'accélération d'évanouissement $S_{EV}$ et le seuil d'accélération $S_A$ et si la pression $P_{MC}$ dans le maître cylindre est compris entre des limites basse $L_B$ et haute $L_H$ de pression d'évanouissement, et si la décélération effective DECCEL

du véhicule est inférieure à une valeur cartographié en fonction de la pression $P_{MC}$.

Dans un mode de réalisation, des modes dégradés peuvent être employés en cas de défaillance de l'information de décélération DECCEL, un seuil en pression paramétrable étant utilisé en remplacement. En cas de défaillance de l'information pression $P_{MC}$ dans le maître cylindre, le procédé peut être inhibé.

L'invention a aussi pour objet un système d'assistance au freinage inclus dans un système de freinage à contrôle dynamique de stabilité. Le système agit sur des étriers de frein. Le système comporte une unité de contrôle hydraulique et une unité de contrôle électronique. L'effort de freinage est transmis par une pédale de frein et un renvoi sur l'axe de poussée d'un maître cylindre. Un effort d'assistance commandé par l'effort pédale est généré par la dépression créée par une source de vide au sein d'un dispositif amplificateur de type servo frein. L'effort de freinage global est transformé en pression par le maître cylindre. L'unité de contrôle hydraulique et l'unité de contrôle électronique sont adaptées à moduler la pression indépendamment dans chaque étrier de frein et à générer de la pression au moyen d'une pompe à partir d'informations collectées par un capteur de pression au sein du maître cylindre et des capteurs de vitesse roue. L'unité de contrôle hydraulique et l'unité de contrôle électronique comprennent une fonction d'assistance au freinage réalisée par le procédé selon l'invention.

L'invention a notamment pour avantages qu'elle permet de pallier d'une part à une carence de dimensionnement du système passif et d'autre part à un risque de dégradation des performances suite à l'évanouissement plaquettes.

D'autres caractéristiques et avantages de l'invention apparaîtront à l'aide de la description qui suit faite en regard des dessins annexés qui représentent :

- la figure 1, par un synoptique, une implantation possible du système selon l'invention d'assistance hydraulique de freinage ;

- la figure 2a, par un synoptique, le procédé d'assistance hydraulique au freinage selon l'invention ;

- la figure 2b, un diagramme représentant les conditions d'activation du système d'assistance hydraulique selon l'invention.

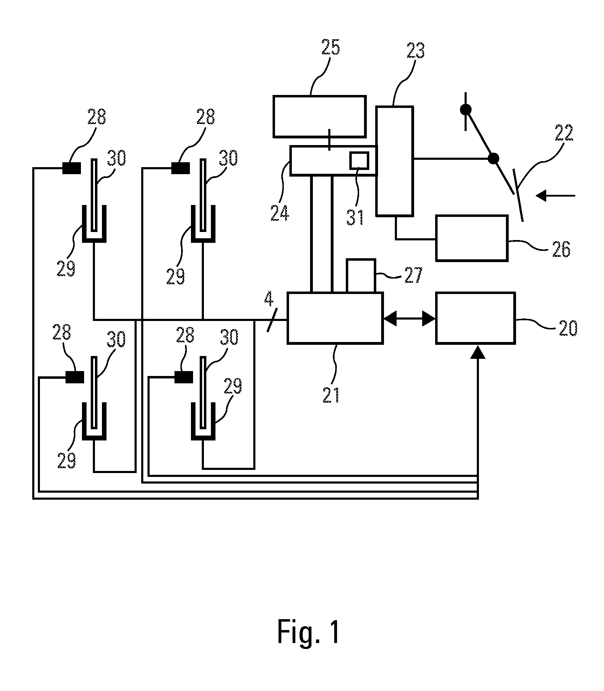

La figure 1 illustre une des implantations possibles du système selon l'invention d'assistance hydraulique de freinage. Le système d'assistance selon l'invention est inclus dans un système de freinage à contrôle dynamique de stabilité (ou selon l'expression anglo-saxonne Electronic Stability Program ESP). Le système de freinage peut agir sur chacune des quatre roues du véhicule, en particulier sur des étriers de frein 29. Chaque étrier de frein 29 agit sur un disque 30. Le système ESP comprend une unité de contrôle hydraulique 21 (ou selon l'expression anglo-saxonne Hydraulic Control Unit HCU) et une unité de contrôle électronique 20 (ou selon l'expression anglo-saxonne Electronic Control Unit ECU). L'effort de freinage est transmis par une pédale de frein 22 et un renvoi sur l'axe de poussée d'un maître cylindre 24. Sur cet axe de poussée vient s'ajouter un effort d'assistance commandé par l'effort pédale et généré par la dépression créée par une source de vide 26 au sein d'un dispositif amplificateur 23. L'effort de freinage global est alors transformé en pression par le maître cylindre 24 sur deux circuits appelés communément primaire et secondaire. L'HCU 21 et l'ECU 20 peuvent ensuite d'une part moduler la pression indépendamment dans chaque étrier de frein 29 (pour chaque roue donc) et d'autre part générer de façon autonome de la pression au moyen d'une pompe 27. Pour cela, l'HCU 21 et l'ECU 20 récupèrent des informations au moyen de capteurs, dont notamment un ou plusieurs capteur(s) de pression 31 au sein du maître cylindre 24 et des capteurs de vitesse roue 28. D'autres capteurs peuvent également être utilisés comme par exemple le capteur d'appui pédale de frein (non représenté ici). L'HCU 21 et l'ECU 20 apporte une fonction d'assistance au freinage. Cette fonction permet d'atteindre une décélération maximale du véhicule en fonction de l'adhérence disponible, en générant une pression suffisante sur les étriers de frein 29 pour déclencher la fonction ABS du système ESP. La fonction d'assistance est active seulement dans certaines situations de vie du véhicule. Ces situations de vie correspondent à des dynamiques d'enfoncement pédale lentes ainsi qu'à des niveaux d'effort plus importants correspondant au point de saturation du dispositif amplificateur 23 et/ou à des conditions dégradées d'adhérence plaquette des étriers de frein 29 (freins chauds avec évanouissement). Les situations de vie correspondant aux cas typiques de réalisation de mesures de distances d'arrêt avec freins froids où la dynamique et le niveau d'effort d'enfoncement pédale 22 sont suffisants, sont exclues.

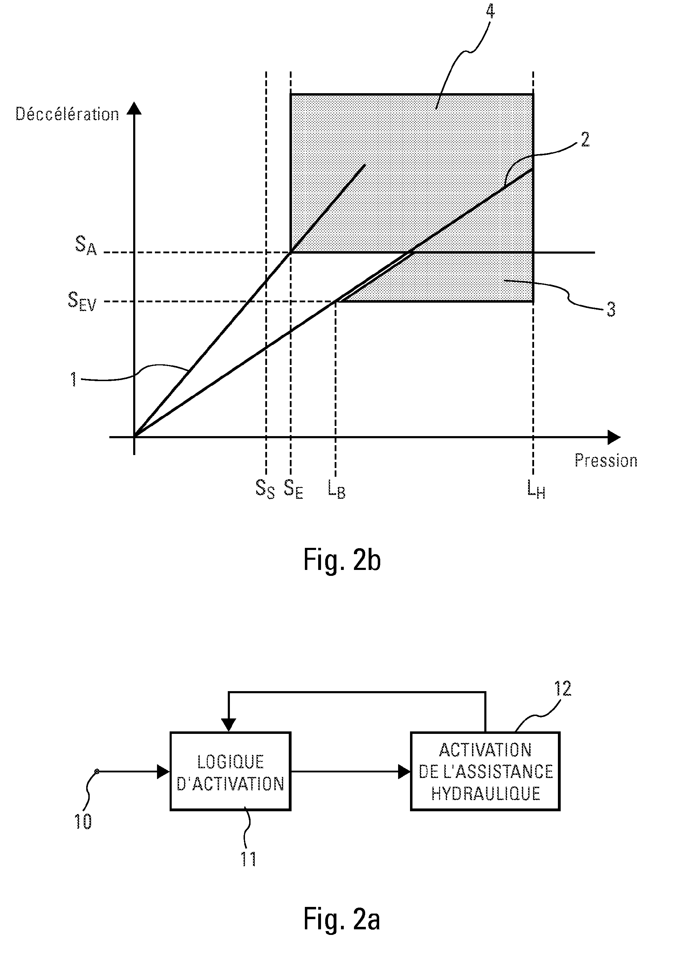

La figure 2b illustre par un synoptique le procédé d'assistance hydraulique au freinage selon l'invention. Le procédé selon l'invention reçoit en entrée de manière continue un ensemble de signaux 10. Parmi ces signaux 10, le procédé exploite en entrée :

- des signaux véhiculant des informations relatives à la décélération du véhicule (estimée par exemple au moyen des quatre capteurs de vitesse de roue 28 compris dans le système de freinage) ;
- un signal permettant d'établir la pression dans le maître cylindre 24;
- un signal correspondant au gradient de pression du maître cylindre 24 filtré au moyen d'élément de filtrage paramétrable en fonction de la mise au point et du paramétrage du procédé selon l'invention pour un véhicule donné ou un type de véhicule donné;
- un signal comprenant des informations d'états de régulation des autres fonctions du système de freinage.

Le procédé selon l'invention comporte une étape 11 renfermant la logique d'activation du système d'assistance hydraulique au freinage. L'étape 11 reçoit en entrée l'ensemble des signaux 10, de manière continue ou régulière. La logique d'activation de l'étape 11 détermine en fonction de cet ensemble de signaux 10 à quelles conditions le dispositif d'assistance hydraulique selon l'invention doit être activé. Ainsi, lorsque la logique d'activation de l'étape 11 évalue que lesdites conditions sont remplies, le procédé selon l'invention dans une étape 12 active le dispositif d'assistance hydraulique, c'est-à-dire la pompe 27. Le dispositif d'assistance hydraulique génère alors un gradient maximum de pression via la pompe 27.

La figure 2a montre un exemple de diagramme représentant les conditions d'activations du système d'assistance hydraulique selon l'invention. Les conditions représentées, non limitatives, sont la pression dans le maître cylindre 24 en abscisse et la décélération du véhicule en ordonnée. La courbe 1 caractérise le comportement moyen d'un système de freinage dont les freins sont froids. La courbe 2 représente une fonction paramétrable de la pression dans le maître cylindre 24. Cette fonction peut être une simple droite, telle que représenté sur la figure 2a. Sont représentés sur le diagramme, d'une part, un seuil d'accélération $S_A$ et un seuil d'accélération d'évanouissement $S_{EV}$ sur l'axe des ordonnées et, d'autre part, un seuil d'entrée $S_E$ et un seuil de sortie $S_S$ sur l'axe des abscisses. Les limites basse $L_B$ et haute $L_H$ de pression d'évanouissement sont aussi représentées sur l'axe des abscisses. Ces seuils sont déterminés en fonction notamment des caractéristiques des organes constitutifs du système de frein, des caractéristiques du véhicule ainsi que du paramétrage du système d'assistance hydraulique au freinage selon l'invention. Les seuils $S_A$, $S_{EV}$, $S_E$, $S_S$, les limites LB et LH ainsi que la fonction représentée par la courbe 2 permettent de délimiter les conditions définissant une situation d'évanouissement 3 ou une situation de saturation 4 du dispositif amplificateur 23.

Sur la figure 2b, l'étape 11, comprenant la logique d'activation du système d'assistance, vise à déterminer notamment les instants où le dispositif amplificateur 23 est saturé ainsi que les instants où les plaquettes des étriers de frein 29 sont victimes d'évanouissement. Ainsi, la logique d'activation de l'étape 11 détermine si le point de saturation du dispositif amplificateur 23 est atteint (condition notée SATURATION_AMPLI) en vérifiant si la décélération effective DECCEL du véhicule (connue grâce aux signaux d'entrée 10) est supérieure au seuil d'accélération $S_A$ et si la pression $P_{MC}$ dans le maître cylindre 24 est supérieure au seuil d'entrée $S_E$. Ceci peut être décrit par l'expression booléenne suivante :

$$\text{SATURATION\_AMPLI} = (\text{DECCEL} > S_A) \text{ ET } (P_{MC} > S_E)$$

La logique d'activation de l'étape 11 détermine si les plaquettes des étriers de frein 29 sont sujettes à l'évanouissement (condition notée EVANOUISSEMENT) en vérifiant si la décélération effective DECCEL du véhicule est comprise entre le seuil d'accélération d'évanouissement $S_{EV}$ et le seuil d'accélération $S_A$ et si la pression $P_{MC}$ dans le maître cylindre 24 est compris entre les limites basse $L_B$ et haute $L_H$ de pression d'évanouissement et si la décélération effective DECCEL du véhicule est inférieure à une fonction paramétrable F(MC) de la pression dans le maître cylindre 24. Ceci peut être décrit par l'expression booléenne suivante :

$$\text{EVANOUISSEMENT} = (S_{EV} < \text{DECCEL} < S_A) \text{ ET } (L_B < P_{MC} < L_H) \text{ ET }$$
$$(\text{DECCEL} < F(MC))$$

La fonction paramétrable F(MC) est représentée par la courbe 2.

Si au moins l'une des conditions SATURATION_AMPLI et EVANOUISSEMENT est vraie, la logique d'activation de l'étape 11 va encore s'assurer que :

o le signal correspondant au gradient de pression du maître cylindre 24 filtré, noté ci-après GRAD_PRESSION_FILTRE, est inférieur à un seuil évoluant dynamiquement, noté $S_{DYN}$ ;
o les informations d'états de régulation, notées ETAT_AUTRES_FONCTIONS, de certaines autres fonctions du système de freinage, plus particulièrement la fonction d'antiblocage des roues (ABS), indiquent que celles-ci ne sont pas activées (les autres fonctions du système de freinage ne sont pas activées).

L'assertion correspondant à l'activation du système d'assistance hydraulique, notée ACTIVATION, peut être décrit par l'expression booléenne suivante :

$$ACTIVATION =$$
$$(SATURATION\_AMPLI + EVANOUISSEMENT) \; ET$$
$$(GRAD\_PRESSION\_FILTRE < S_{DYN}) \; ET$$
$$(\,!\,ETAT\_AUTRES\_FONCTIONS)$$

Si l'assertion ACTIVATION est vraie, alors l'étape 12 d'activation de l'assistance hydraulique est réalisée : la pompe 27 est activée. Dans le cas contraire, l'étape 12 n'est pas réalisée. L'activation du système d'assistance hydraulique est maintenue jusqu'à ce que :

o la fonction antiblocage est activée et la pression maitre cylindre générée par le conducteur est suffisante pour la maintenir active,; ou
o la pression $P_{MC}$ dans le maître cylindre 24 est inférieure au seuil de sortie $S_S$ ;
c'est-à-dire jusqu'à ce que l'expression booléenne suivante soit vérifiée :

$$MAINTIEN\_ABS\_PAR\_CONDUCTEUR + (P_{MC} < S_S)$$

La logique d'activation de l'étape 11 peut être exposer par le pseudo-code suivant :
**SI** ACTIVATION **ALORS**
*activation du système d'assistance hydraulique*
**jusqu'à ce que** MAINTIEN_ABS_PAR_CONDUCTEUR OU ($P_{MC} < S_S$).
avec MAINTIEN_ABS_PAR_CONDUCTEUR = ETAT_ABS et P_MC > coeff * P_ABS
où P_ABS est une estimation de la pression d'entrée en ABS, image de l'adhérence disponible et coeff un paramètre de réglage (en principe, réglée supérieur à 100%).
Les seuils $S_A$, $S_{EV}$, $S_E$, $S_S$ et les limites $L_B$ et $L_H$ d'activation, représentés sur la figure 1b, permettant de décrire la logique d'activation de l'étape 11, sont paramétrables. La limite $L_B$ de pression minimale correspondant à l'évanouissement des plaquettes des étriers de frein 29 peut être inférieure ou supérieure au seuil $S_E$ de la pression de saturation du dispositif amplificateur 23. Le gradient de pression généré par la pompe 27 doit être maximal. Des modes dégradés peuvent être envisager par exemple en cas de défaillance de l'information de décélération, en utilisant en remplacement par exemple uniquement un seuil en pression paramétrable. En cas de défaillance de l'information pression $P_{MC}$ dans le maître cylindre 24, le procédé est inhibé. Une fonction de type répartition électronique de freinage par modulation de l'effort exercé sur le train arrière, éventuellement compris dans le système de freinage, peut être active en même temps que l'assistance hydraulique de freinage du système selon l'invention.

**Revendications**

1. Procédé d'assistance au freinage d'un véhicule, ledit véhicule comportant un système de freinage agissant sur des étriers de frein, ledit système de freinage comportant au moins un maître cylindre, un dispositif amplificateur, un dispositif d'assistance apte à générer de la pression à destination des étriers de frein, **caractérisé en ce qu'**il comporte une étape (11) évaluant régulièrement ou continuellement la condition suivante :

o le point de saturation du dispositif amplificateur est atteint ou les plaquettes des étriers de frein sont sujet à l'évanouissement ; et,
o le gradient de pression du maître cylindre filtré est inférieur à un seuil déterminé ($S_{DYN}$) évoluant dynamiquement ; et,
o la décélération effective (DECCEL) du véhicule est inférieure à une fonction paramétrable (F(MC)) de la pression dans le maître cylindre; et,
o la fonction antiblocage n'est pas activée ;

et dans le cas où ladite condition est remplie, le dispositif d'assistance est activé (12) jusqu'à ce que :

> o la fonction antiblocage soit activée et la pression dans le maître cylindre ($P_{MC}$) soit suffisante pour la maintenir ; ou
>
> o la pression ($P_{MC}$) dans le maître cylindre soit inférieure à un seuil de sortie déterminé ($S_S$).

**2.** Procédé selon la revendication 1, **caractérisé en ce que** la condition (SATURATION_AMPLI) correspondant à l'atteinte du point de saturation du dispositif amplificateur est évaluée en vérifiant si la décélération effective (DECCEL) du véhicule est supérieure à un seuil d'accélération déterminé ($S_A$) et si la pression ($P_{MC}$) dans le maître cylindre est supérieure à un seuil d'entrée déterminé ($S_E$).

**3.** Procédé selon l'une quelconque des revendications 1 à 2, **caractérisé en ce que** la condition (EVANOUISSEMENT) correspondant aux cas où les plaquettes des étriers de frein sont sujettes à l'évanouissement, est évaluée en vérifiant si la décélération effective (DECCEL) du véhicule est comprise entre un seuil d'accélération d'évanouissement déterminé ($S_{EV}$) et le seuil d'accélération ($S_A$) et si la pression ($P_{MC}$) dans le maître cylindre est comprise entre des limites déterminées basse ($L_B$) et haute ($L_H$) de pression d'évanouissement et si la décélération effective (DECCEL) du véhicule est inférieure à la fonction paramétrable F(MC) de la pression dans le maître cylindre.

**4.** Procédé selon l'une quelconque des revendications 1 à 3, **caractérisé en ce que** des modes dégradés peuvent être employés en cas de défaillance de l'information de décélération (DECCEL), un seuil en pression paramétrable étant utilisé en remplacement.

**5.** Procédé selon l'une quelconque des revendications 1 à 4, **caractérisé en ce qu'**en cas de défaillance de l'information pression ($P_{MC}$) dans le maître cylindre, le procédé est inhibé.

**6.** Système d'assistance au freinage inclus dans un système de freinage à contrôle dynamique de stabilité, ledit système agissant sur des étriers de frein (29), ledit système comportant une unité de contrôle hydraulique (21), une unité de contrôle électronique (20), l'effort de freinage étant transmis par une pédale de frein (22) et un renvoi sur l'axe de poussée d'un maître cylindre (24), un effort d'assistance commandé par l'effort pédale étant généré par la dépression créée par une source de vide (26) au sein d'un dispositif amplificateur (23), l'effort de freinage global étant transformé en pression par le maître cylindre (24), l'unité de contrôle hydraulique (21) et l'unité de contrôle électronique (20) étant adaptées à moduler la pression indépendamment dans chaque étrier de frein (29) et à générer de la pression au moyen d'une pompe (27) à partir d'informations collectées par un capteur de pression au sein du maître cylindre (24) et des capteurs de vitesse roue (28) **caractérisé en ce que** l'unité de contrôle hydraulique (21) et l'unité de contrôle électronique (20) comprennent une fonction d'assistance au freinage réalisée par le procédé conforme à l'une quelconque des revendications 1 à 5.

Fig. 1

Fig. 2b

Fig. 2a